(19) **Europäisches Patentamt**

**European Patent Office**

**Office européen des brevets**

(11) **EP 1 722 250 A1**

(12) **DEMANDE DE BREVET EUROPEEN**

(43) Date de publication:
**15.11.2006 Bulletin 2006/46**

(51) Int Cl.:
*G01S 17/88* (2006.01)      *G01S 17/58* (2006.01)

(21) Numéro de dépôt: **06111755.2**

(22) Date de dépôt: **27.03.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **10.05.2005  FR 0504685**

(71) Demandeur: **THALES**
**92200 Neuilly sur Seine (FR)**

(72) Inventeurs:
• **Schlotterbeck, Jean-Pierre**
  **26300 Rochefort-Samson (FR)**
• **Baillon, Bertrand**
  **26000 Valence (FR)**
• **Lacondemine, Xavier**
  **26000 Valence (FR)**

(74) Mandataire: **Beylot, Jacques et al**
**Marks & Clerk France**
**31-33 Avenue Aristide Briand**
**94117 Arcueil Cédex (FR)**

(54) **Dispositif de mesure optique actif avec amplification de faible signal**

(57)     L'invention est relative à un dispositif de mesure optique destiné notamment à évaluer la vitesse d'un aéronef par détection d'un décalage Doppler. Le dispositif de mesure par sonde optique comporte au moins deux faisceaux lumineux de longueur d'onde différentes $\lambda1$, $\lambda2$ désignés par premier faisceau et second faisceau, le dispositif illuminant un milieu de référence MILREF (60) par le premier faisceau et recueillant un écho lumineux Sr renvoyé par le milieu de référence, caractérisé en ce qu'il comporte :
- un coupleur optique COUPL (70) recevant, d'une part, l'écho lumineux Sr renvoyé par le milieu de référence MILREF, et d'autre part, le second faisceau, le coupleur fournissant une onde résultante Or comportant le second faisceau et l'écho lumineux Sr ;
- une unité d'amplification optique AMPLI (80), de bande passante $B_{opt}$, recevant l'onde résultante Or et fournissant une onde résultante amplifiée Ora.

FIG.2

**Description**

L'invention est relative à un dispositif de mesure optique destiné notamment à évaluer la vitesse d'un aéronef par détection d'un décalage Doppler.

Des dispositifs de mesure optique ou Lidars servent à déterminer la vitesse et la direction du vent par la détection de l'effet Doppler sur un signal de rétro-diffusion d'un faisceau lumineux émis par le dispositif de mesure dans un milieu que l'on souhaite analyser. L'effet Doppler consiste en un décalage de la fréquence d'une onde lumineuse renvoyée par un objet en mouvement. La distance entre le dispositif de mesure et l'objet, par exemple un ensemble de particules en mouvement, définit le type de détection du décalage Doppler qui peut être selon le cas de type cohérent ou encore de type direct ou incohérent.

Ces dispositifs de mesure optique sont aussi utilisés pour mesurer la vitesse des aéronefs par rapport au milieu environnant, le dispositif de mesure optique est appelé "anémomètre laser" dans ce cas d'utilisation.

Dans l'application d'anémomètre, on utilise une détection de type cohérent ; un faisceau issu d'une source de rayonnement lumineux, par exemple d'un laser, est séparé en deux faisceaux. Un premier faisceau appelé faisceau signal est envoyé dans la zone de mesure et un second faisceau appelé faisceau de référence ou oscillateur local constitue une référence pour la détection du décalage Doppler.

Les aérosols présents dans l'atmosphère rétro-diffusent la lumière du faisceau signal dont la fréquence subit un décalage Doppler par rapport à celle de la lumière incidente. Le signal rétro-diffusé par le milieu est mélangé avec le faisceau de référence, le résultat de ce mélange est envoyé sur la surface photo-sensible d'un détecteur. L'écart entre la fréquence du signal rétro-diffusé et celle du faisceau de référence est mesuré sur le signal électrique délivré par le détecteur, on en déduit une mesure du décalage de fréquence Doppler puis de la vitesse de l'aéronef sachant que l'expression qui lie ces deux grandeurs est la suivante :

$$Fd=2v/\lambda$$

v étant la projection sur l'axe de visée du laser du vecteur vitesse de l'aéronef par rapport au milieu ambiant (atmosphère) ;

λ étant la longueur d'onde du faisceau émis.

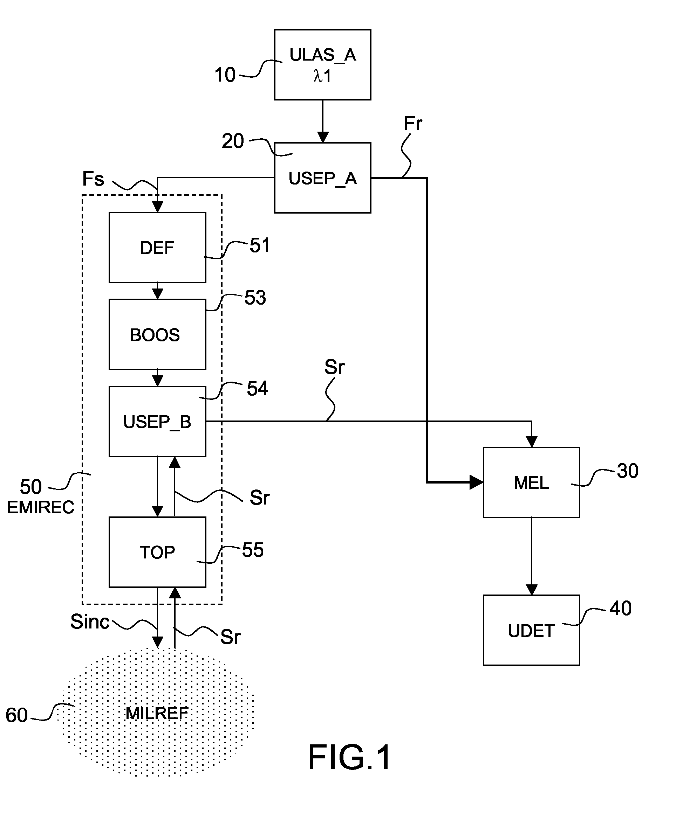

La figure 1 montre un synoptique d'un dispositif de mesure optique de fréquence Doppler, constituant l'état de l'art d'un anémomètre hétérodyne.

Le dispositif de la figure 1 comporte une unité laser ULAS_A 10 fournissant un faisceau lumineux pour attaquer une unité de séparation USEP_A 20 délivrant un faisceau lumineux de signal Fs pour attaquer une voie de signal optique d'émission/réception EMIREC 50 et un faisceau lumineux de référence Fr pour attaquer un coupleur optique MEL 30.

L'unité laser ULAS_A comporte une source de rayonnement et un dispositif optique mettant spatialement en forme le rayonnement issu de la source, produisant un faisceau lumineux. La longueur d'onde λ1 du faisceau lumineux émis par l'unité laser ULAS_A est par exemple 1,55μm qui est une longueur d'onde communément employée dans le domaine des Télécommunications optiques et pour laquelle l'atmosphère est relativement transparente.

Les différents constituants de l'unité laser ULAS_A ne sont pas représentés sur la figure 1.

La voie de signal optique d'émission/réception EMIREC comporte en série un amplificateur de signal optique BOOS 53, une unité de séparation USEP_B 54 et une tête optique TOP 55 fournissant un signal optique de puissance Sinc focalisé dans le milieu de référence MILREF 60. La voie de signal optique d'émission/réception EMIREC peut également comporter un dispositif de décalage de fréquence de signal optique DEF 51, par exemple un modulateur acousto-optique décalant la fréquence du faisceau qui lui est appliqué de l'ordre d'une centaine de Méga-Hertz.

La position et l'orientation du faisceau Sinc émergeant de la tête optique TOP peuvent être commandées.

L'unité de séparation USEP_B comporte, par exemple, en série un coupleur de séparation de polarisation suivi d'une liaison optique bidirectionnelle. Les différents constituants de l'unité de séparation USEP_B ne sont pas représentés sur la figure 1.

La tête optique TOP capte des rayons lumineux Sr (écho lumineux) rétro-diffusés par le milieu de référence MILREF dans une direction déterminée, ces rayons lumineux rétro-diffusés Sr comportant éventuellement un décalage de fréquence Doppler par rapport à la fréquence du faisceau incident Sinc dans le milieu MILREF.

Les rayons lumineux rétro-diffusés Sr, sont captés par la tête optique TOP, ils prennent la forme d'un faisceau lumineux dit « faisceau signal rétro-diffusé » qui est transporté à travers l'unité de séparation USEP_B pour attaquer le coupleur de mélange optique MEL.

Le coupleur de mélange optique MEL reçoit, sur une première entrée le faisceau lumineux de référence Fr provenant du coupleur USEP_A et sur une deuxième entrée le faisceau signal rétro-diffusé, ou encore «écho lumineux », provenant de l'unité de séparation USEP_B. Le coupleur de mélange optique MEL effectue le mélange des deux signaux optiques appliqués à ses deux entrées, produisant un battement sur la surface photosensible d'un détecteur d'une unité de détection UDET 40.

L'unité de détection UDET comporte un détecteur photosensible délivrant un signal électrique lorsqu'un faisceau lumineux de longueur d'onde λ1 est appliqué sur sa surface sensible, ce signal électrique varie à la même fréquence que le mouvement périodique du battement, et une unité de traitement de signal qui est alimentée par le signal électrique issu du détecteur et qui réalise la détection et l'extraction du décalage de fréquence Doppler. La mesure de la vitesse v du déplacement de l'aéronef ainsi que la détermination du sens de son déplacement se déduisent de la mesure du décalage de fréquence Doppler.

Les constituants de l'unité de détection UDET ne sont pas représentés sur la figure 1.

L'un des principaux critères de mérite de l'anémomètre représenté sur la figure 1 est le rapport signal sur bruit (RSB) mesuré en sortie du détecteur de l'unité de détection UDET. Plus la valeur du RSB est élevée et plus la mesure anémométrique est aisée à réaliser, l'étude de la valeur prise par ce paramètre permet par exemple d'optimiser le choix des composants qui équipent le dispositif de mesure optique.

Une maximisation de la valeur du rapport signal sur bruit RSB est obtenue lorsque le bruit de photon, qui constitue la limite ultime sous laquelle il est impossible de descendre, domine les autres sources de bruit (bruit d'intensité du laser, le bruit d'obscurité du détecteur, bruit thermique du détecteur). Cette maximisation peut être atteinte en augmentant la puissance du signal utile.

Une domination du bruit de photon sur les autres termes de bruit peut être atteinte en diminuant la puissance de bruit d'obscurité du détecteur, et/ou en augmentant, la puissance du signal de la voie optique de référence ou « oscillateur local » $P_{OL}$, arrivant sur le détecteur. Une augmentation de la puissance de l'oscillateur local $P_{OL}$ comporte l'inconvénient d'induire des surcoûts au niveau de l'unité de détection, cette augmentation reste par ailleurs limitée par le niveau de saturation du détecteur.

La puissance $P_{OL}$ étant limitée, l'invention est basée sur l'idée d'un accroissement de la puissance du signal utile par une augmentation de la puissance du signal de retro-diffusion $P_{SR}$ arrivant sur le détecteur.

A cet effet, la présente invention propose un dispositif de mesure par sonde optique comportant au moins deux faisceaux lumineux de longueur d'onde différentes $\lambda 1$, $\lambda 2$ désignés par premier faisceau et second faisceau, le dispositif illuminant un milieu de référence MILREF par le premier faisceau et recueillant un écho lumineux renvoyé par le milieu de référence MILREF, remarquable en ce qu'il comporte :

- un coupleur optique COUPL recevant, d'une part, l'écho lumineux Sr renvoyé par le milieu de référence MILREF, et d'autre part, le second faisceau, le coupleur optique COUPL fournissant une onde résultante Or comportant le second faisceau et l'écho lumineux Sr ;
- une unité d'amplification optique AMPLI, de bande passante $B_{opt}$, recevant l'onde résultante Or et fournissant une onde résultante amplifiée Ora.

Avantageusement, la fréquence du second faisceau, correspondant à $\lambda 2$, et la fréquence de l'écho lumineux, sont incluses dans la bande passante $B_{opt}$ de l'unité d'amplification optique AMPLI.

Avantageusement, la ou les sources de rayonnement servant à générer les faisceaux du dispositif sont soit continues soit impulsionnelles.

Avantageusement, la ou les sources de rayonnement servant à générer les faisceaux du dispositif sont des micro-lasers réalisés en optique intégrée sur verre.

Avantageusement, les composants constituant le dispositif sont hybridés sur un guide d'onde planaire.

Par rapport à l'art antérieur, cette solution comporte un unique surcoût représenté par le dispositif d'amplification du signal optique, ce surcoût reste modique lorsqu'on emploie des composants utilisés en grand nombre dans l'industrie des Télécommunications.

L'invention sera mieux comprise par la description des différentes réalisations du dispositif de mesure par sonde optique selon l'invention, en référence aux dessins annexés dans lesquels :

- la figure 1, déjà décrite, montre un synoptique d'un dispositif de mesure optique avec une détection de type cohérente de l'état de l'art ;
- la figure 2, représente un synoptique d'une réalisation du dispositif, selon l'invention ;
- la figure 3, représente un synoptique d'une variante de la réalisation de la figure 2.

Pour faciliter la lecture de la description, les mêmes repères désigneront les mêmes éléments dans les différentes figures.

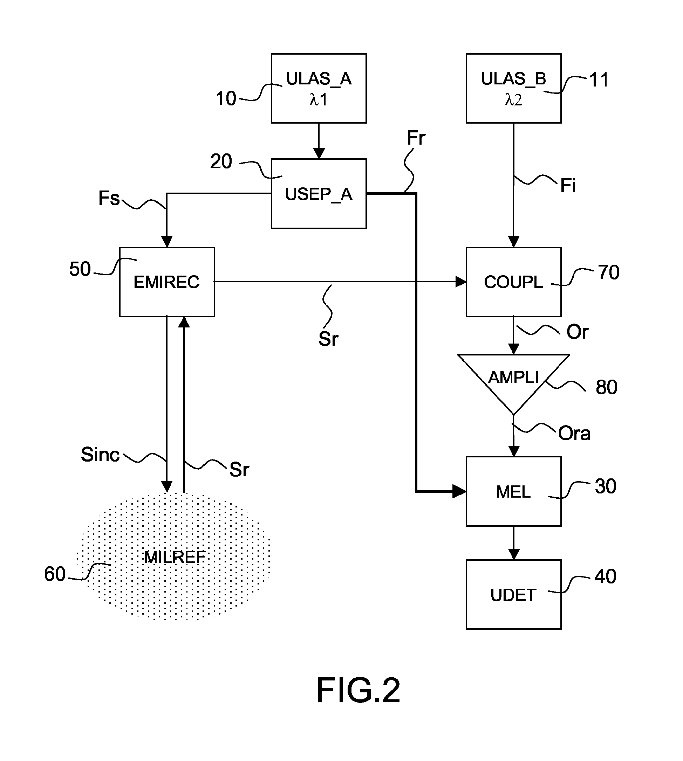

La figure 2, représente un synoptique d'une réalisation du dispositif, selon l'invention, par exemple pour un anémomètre laser.

Le dispositif de la figure 2 comporte deux unités laser ULAS_A 10 ULAS_B 11.

L'unité laser ULAS_A, identique à celle de la figure 1, fournissant le premier faisceau pour attaquer une unité de séparation USEP_A 20 délivrant un faisceau lumineux de signal Fs pour attaquer une voie de signal optique d'émission/réception EMIREC 50, et un faisceau lumineux de référence Fr pour attaquer le coupleur de mélange optique MEL 30.

L'unité laser ULAS_B, identique à l'unité laser ULAS_A de la figure 1, générant le deuxième faisceau lumineux, attaquant une première entrée d'un coupleur optique COUPL 70, le coupleur optique COUPL recevant sur une deuxième entrée l'écho lumineux Sr provenant d'une voie de signal optique d'émission/réception EMIREC, le coupleur optique COUPL fournissant en sortie l'onde résultante Or. La voie de signal optique d'émission/réception EMIREC, identique à celle de la figure 1, fournit, à partir du faisceau lumineux de signal Fs, un signal optique de puissance Sinc focalisé dans le milieu de référence MILREF, recueille l'écho lumineux Sr et le transporte jusqu'au coupleur optique COUPL, le faisceau lumineux de référence Fr et le signal optique de puissance Sinc pouvant être décalés en fréquence ;

Le dispositif comporte en outre :

- une unité d'amplification optique AMPLI 80 recevant l'onde résultante Or issue de la sortie du coupleur optique COUPL, et générant une onde résultante amplifiée Ora.
Le gain de l'unité d'amplification optique AMPLI est supérieur à 3dB. L'unité d'amplification optique AMPLI est utilisé sur deux sous-bandes de fréquence. La première est la bande utile à l'anémométrie laser, c'est à dire quelques centaines de Méga-Hertz autour de la fréquence émise vers le milieu de référence MILREF, et correspondant au domaine des fréquences Doppler recherchées. La deuxième sous-bande est éloignée de la première de quelques dizaines de Giga-Hertz mais reste dans la bande passante de l'unité d'amplification optique AMPLI ;
- le coupleur de mélange optique MEL recevant sur une première entrée, le faisceau lumineux de référence Fr issu de l'unité de séparation USEP_A et sur une deuxième entrée, l'onde résultante amplifiée Ora. Le coupleur de mélange optique MEL délivre un signal optique de battement comportant la somme du faisceau lumineux de référence Fr et de l'onde résultante amplifiée Ora ;
- une unité de détection UDET 40 comportant un détecteur photo-sensible, recevant sur sa surface sensible, le signal optique de battement issu du coupleur de mélange optique MEL et fournissant un signal électrique de battement. La fréquence du signal électrique de battement est égale à la différence de la fréquence du faisceau lumineux de référence Fr et de celle de l'onde résultante amplifiée Ora.

La longueur d'onde $\lambda 2$ du second faisceau est légèrement différente de la longueur d'onde $\lambda 1$ du premier faisceau. Ici « légèrement différente » se réfère au domaine de l'optique, l'écart entre $\lambda 1$ et $\lambda 2$ est par exemple d'un dixième de nanomètre pour une longueur d'onde $\lambda 1$ de 1,55$\mu$m, ce qui exprimé en écart de fréquence entre le premier faisceaux et le second faisceau équivaut à une dizaine de Giga Hertz.

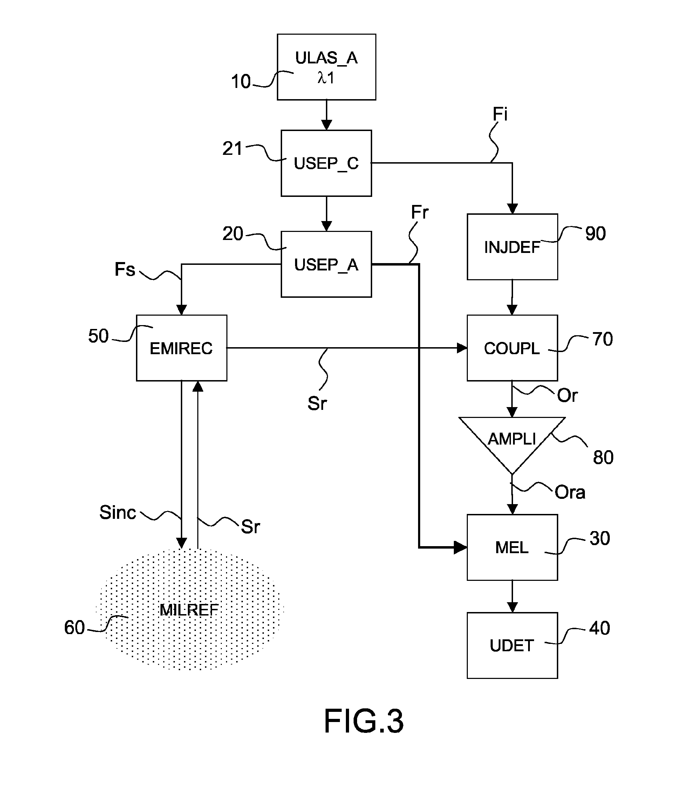

La figure 3, représente une variante de la réalisation du dispositif de la figure 2.

Dans cette réalisation, le dispositif comporte une unique unité laser ULAS_A 10, identique à celle de la figure 1, comportant elle-même une unique source de rayonnement, le premier et le second faisceau sont générés à partir de cette unique source de rayonnement.

L'unité laser ULAS_A fournit un premier faisceau pour attaquer une unité de séparation USEP_C 21 délivrant un faisceau secondaire pour attaquer une unité de séparation USEP_A 20 et un faisceau d'injection Fi pour attaquer un dispositif de décalage de fréquence de signal optique INJDEF 90.

L'unité de séparation USEP_A délivre un faisceau lumineux de signal Fs pour attaquer une voie de signal optique d'émission/réception EMIREC 50, et un faisceau lumineux de référence Fr pour attaquer un coupleur de mélange optique MEL 30. La voie de signal optique d'émission/réception EMIREC, identique à celle de la figure 1, fournit, à partir du faisceau lumineux de signal Fs, un signal optique de puissance Sinc focalisé dans le milieu de référence MILREF, recueille l'écho lumineux Sr et le transporte jusqu'à une première entrée d'un coupleur optique COUPL 70, le faisceau lumineux de référence Fr et le signal optique de puissance Sinc pouvant être décalés en fréquence. Le dispositif de décalage de fréquence de signal optique INJDEF recevant le faisceau d'injection Fi fournit un second faisceau pour attaquer une deuxième entrée du coupleur optique COUPL, qui fournit en sortie une onde résultante Or. Le second faisceau possédant une longueur d'onde $\lambda 2$ légèrement différente de celle du faisceau d'injection Fi.

Le dispositif de décalage de fréquence de signal optique INJDEF décale la fréquence du faisceau qu'il produit en sortie, par rapport à la fréquence de celui qui lui est appliqué. Le décalage de fréquence produit par INJDEF est supérieur à la largeur du domaine des fréquences Doppler recherchées, par exemple si le domaine des fréquences Doppler recherchées vaut 600 Méga Hertz, le décalage de fréquence est supérieur à deux Giga Hertz.

Le dispositif comporte en outre :

- une unité d'amplification optique AMPLI 80 recevant l'onde résultante Or issue de la sortie du coupleur optique COUPL, et générant une onde résultante amplifiée Ora ;
- le coupleur de mélange optique MEL recevant sur une première entrée, le faisceau lumineux de référence Fr issu de l'unité de séparation USEP_A et sur une deuxième entrée, l'onde résultante amplifiée Ora, et délivrant un signal optique de battement comportant la somme du faisceau lumineux de référence Fr et de l'onde résultante amplifiée Ora ;
- une unité de détection UDET 40 comportant un détecteur photo-sensible, recevant sur sa surface sensible, le signal optique de battement issu du coupleur de mélange optique MEL et fournissant un signal électrique de battement, la fréquence du signal électrique de battement étant égale à la différence de la fréquence du faisceau lumineux de référence Fr et de celle de l'onde résultante amplifiée Ora.

Le moyen de générer le second faisceau constitue l'unique différence entre le dispositif représenté sur la figure 2 et sa variante représentée sur la figure 3.

Dans une autre variante, le dispositif comporte deux voies de signal optique distinctes, on parle alors de configuration « bistatique ». Les deux voies de signal optique distinctes se décrivant comme suit :

- une voie de signal optique d'émission, fournissant un signal optique de puissance Sinc focalisé dans le milieu de référence MILREF 60 ;

- une voie de signal optique de réception recueillant l'écho lumineux Sr et le transportant jusqu'au coupleur de mélange optique MEL 30 ;

La voie de signal optique d'émission comporte un amplificateur de signal optique BOOS 53, et une tête optique TOP 55 fournissant un signal optique de puissance Sinc focalisé dans le milieu de référence MILREF. La voie de signal optique d'émission peut également comporter, en série, un dispositif de décalage de fréquence de signal optique, par exemple un modulateur acousto-optique ou un modulateur électro-optique décalant la fréquence du faisceau qui lui est appliqué de l'ordre d'une centaine de Méga-Hertz.

La voie de signal optique de réception comporte une autre tête optique, qui capte les rayons lumineux Sr rétro-diffusés par le milieu de référence MILREF. En sortie de la voie optique de réception, les rayons lumineux Sr prennent la forme d'un faisceau lumineux dit « faisceau signal rétro-diffusé » ou écho lumineux Sr qui est transporté jusqu'au coupleur optique COUPL 70.

Le nombre de voies de signal optique utilisées pour sonder le milieu de référence MILREF et capter l'écho lumineux Sr constitue l'unique différence entre le dispositif représenté sur la figure 2 et cette autre variante du dispositif.

**Revendications**

1. Dispositif de mesure par sonde optique comportant au moins deux faisceaux lumineux de longueur d'onde différentes $\lambda 1$, $\lambda 2$ désignés par premier faisceau et second faisceau, le dispositif illuminant un milieu de référence MILREF (60) par le premier faisceau et recueillant un écho lumineux Sr renvoyé par le milieu de référence, **caractérisé en ce qu'**il comporte :

   - un coupleur optique COUPL (70) recevant, d'une part, l'écho lumineux Sr renvoyé par le milieu de référence MILREF, et d'autre part, le second faisceau, le coupleur optique COUPL fournissant une onde résultante Or comportant le second faisceau et l'écho lumineux Sr ;
   - une unité d'amplification optique AMPLI (80), de bande passante $B_{opt}$, recevant l'onde résultante Or et fournissant une onde résultante amplifiée Ora.

2. Dispositif selon la revendication 1, **caractérisé en ce que** la fréquence du second faisceau, correspondant à $\lambda 2$, et la fréquence de l'écho lumineux Sr, sont incluses dans la bande passante $B_{opt}$ de l'unité d'amplification optique AMPLI.

3. Dispositif selon l'une des revendications 1 ou 2, **caractérisé en ce qu'**il comporte :

   - une unité laser ULAS_A (10) fournissant le premier faisceau pour attaquer une unité de séparation USEP_A (20) délivrant un faisceau lumineux de signal Fs pour attaquer une voie de signal optique d'émission/réception EMIREC (50), et un faisceau lumineux de référence Fr pour attaquer une première entrée d'un coupleur de mélange optique MEL (30) ;
   - une unité laser ULAS_B (11) générant le deuxième faisceau lumineux, attaquant une première entrée du coupleur optique COUPL le coupleur optique COUPL recevant sur une deuxième entrée l'écho lumineux Sr provenant de la voie de signal optique d'émission/réception EMIREC, le coupleur optique COUPL fournissant en sortie l'onde résultante Or,
   - la voie de signal optique d'émission/réception EMIREC, à partir du faisceau lumineux de signal Fs, fournissant un signal optique de puissance Sinc focalisé dans le milieu de référence MILREF, recueillant l'écho lumineux Sr et le transportant jusqu'au coupleur optique COUPL, le faisceau lumineux de référence Fr et le signal optique de puissance Sinc pouvant être décalés en fréquence ;
   - l'unité d'amplification optique AMPLI recevant l'onde résultante Or issue de la sortie du coupleur optique COUPL, et générant une onde résultante amplifiée Ora,
   - le coupleur de mélange optique MEL recevant sur une première entrée, le faisceau lumineux de référence Fr issu de l'unité de séparation USEP_A et sur une deuxième entrée, l'onde résultante amplifiée Ora, et délivrant un signal optique de battement comportant la somme du faisceau lumineux de référence Fr et de l'onde résultante amplifiée Ora ;
   - une unité de détection UDET (40) comportant un détecteur photo-sensible, recevant sur sa surface sensible, le signal optique de battement issu du coupleur de mélange optique MEL et fournissant un signal électrique de battement, la fréquence du signal électrique de battement étant égale à la différence de la fréquence du faisceau lumineux de référence Fr et de celle de l'onde résultante amplifiée Ora.

4. Dispositif selon l'une des revendications 1 ou 2, **caractérisé en ce qu'**il comporte :

   - une unité laser ULAS_A (10) fournissant le premier faisceau pour attaquer une unité de séparation USEP_C (21) délivrant un faisceau secondaire pour attaquer une unité de séparation USEP_A (20) et un faisceau d'injection Fi pour attaquer un dispositif de décalage de fréquence de signal optique INJDEF (90), l'unité de séparation USEP_A délivrant un faisceau lumineux de signal Fs pour attaquer une voie de signal optique d'émission/réception EMIREC (50), et un faisceau lumineux de référence Fr pour attaquer un coupleur de mélange optique MEL (30),
- la voie de signal optique d'émission/réception EMIREC, à partir du faisceau lumineux de signal Fs, fournissant un signal optique de puissance Sinc focalisé dans le milieu de référence MILREF, recueillant l'écho lumineux Sr et le transportant jusqu'à une première entrée du coupleur optique COUPL, le faisceau lumineux de référence Fr et le signal optique de puissance Sinc étant décalés en fréquence,
- le dispositif de décalage de fréquence de signal optique INJDEF recevant le faisceau d'injection Fi et fournissant le second faisceau pour attaquer une deuxième entrée du coupleur optique COUPL, le second faisceau possédant une longueur d'onde λ2 légèrement différente de celle du faisceau d'injection Fi, le coupleur optique COUPL fournissant en sortie une onde résultante Or ;
- l'unité d'amplification optique AMPLI recevant l'onde résultante Or issue de la sortie du coupleur optique COUPL, et générant une onde résultante amplifiée Ora ;
- le coupleur de mélange optique MEL recevant sur une première entrée, le faisceau lumineux de référence Fr issu de l'unité de séparation USEP_A et sur une deuxième entrée, l'onde résultante amplifiée Ora, et délivrant un signal optique de battement comportant la somme du faisceau lumineux de référence Fr et de l'onde résultante amplifiée Ora ;
- une unité de détection UDET (40) comportant un détecteur photo-sensible, recevant sur sa surface sensible, le signal optique de battement issu du coupleur de mélange optique MEL et fournissant un signal électrique de battement, la fréquence du signal électrique de battement étant égale à la différence de la fréquence du faisceau lumineux de référence Fr et de celle de l'onde résultante amplifiée Ora.

5. Dispositif selon l'une des revendications 1 à 4 **caractérisé en ce que** la ou les sources de rayonnement des unités laser (10, 11) sont impulsionnelles.

6. Dispositif selon l'une des revendications 1 à 4 **caractérisé en ce que** la ou les sources de rayonnement des unités laser (10, 11) sont continues.

7. Dispositif selon l'une des revendications précédentes, **caractérisé en ce que** la ou les sources de rayonnement des unités laser (10, 11) sont des micro-lasers réalisés en optique intégrée sur verre.

8. Dispositif selon l'une des revendications précédentes, **caractérisé en ce que** les composants le constituant sont hybridés sur un guide d'onde planaire.

9. Dispositif selon l'une des revendications précédentes, **caractérisé en ce que** le gain de l'unité d'amplification optique AMPLI est supérieur à 3dB.

FIG.1

FIG.2

FIG.3

**Office européen des brevets**

## RAPPORT DE RECHERCHE EUROPEENNE

Numéro de la demande

EP 06 11 1755

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 847 817 A (ZEDIKER ET AL) 8 décembre 1998 (1998-12-08) * abrégé * * figures 1,2 * * colonne 9, ligne 14-28 * * colonne 12, ligne 50-54 * ----- | 1-9 | INV. G01S17/88 G01S17/58 |
| X | US 5 172 181 A (MORBIEU ET AL) 15 décembre 1992 (1992-12-15) * abrégé * * figure 1 * ----- | 1-9 | |
| X | US 2002/105632 A1 (HOLTON CARVEL E) 8 août 2002 (2002-08-08) * abrégé * * figure 4 * * alinéa [0039] * ----- | 1-9 | |
| A | US 4 902 127 A (BYER ET AL) 20 février 1990 (1990-02-20) * abrégé * * figure 1 * ----- | 1-9 | |
| A | US 2003/151732 A1 (ROGERS PHILIP L ET AL) 14 août 2003 (2003-08-14) * abrégé * * figure 1 * * alinéa [0014] * ----- | 1-9 | DOMAINES TECHNIQUES RECHERCHES (IPC) G01S |
| A | EP 1 055 941 A (MITSUBISHI DENKI KABUSHIKI KAISHA) 29 novembre 2000 (2000-11-29) * abrégé * * figure 1 * ----- | 1-9 | |
| A | US 2004/036852 A1 (BRUEL CHRISTINE ET AL) 26 février 2004 (2004-02-26) * abrégé * * figure 1 * ----- | 1-9 | |

Le présent rapport a été établi pour toutes les revendications

| Lieu de la recherche | Date d'achèvement de la recherche | Examinateur |
|---|---|---|
| Munich | 14 juin 2006 | Lendroit, S |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 11 1755

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-06-2006

| Document brevet cité au rapport de recherche | | Date de publication | Membre(s) de la famille de brevet(s) | | Date de publication |
|---|---|---|---|---|---|
| US 5847817 | A | 08-12-1998 | AUCUN | | |
| US 5172181 | A | 15-12-1992 | DE | 69105310 D1 | 12-01-1995 |
| | | | DE | 69105310 T2 | 08-06-1995 |
| | | | EP | 0446101 A1 | 11-09-1991 |
| | | | FR | 2659452 A1 | 13-09-1991 |
| US 2002105632 | A1 | 08-08-2002 | AUCUN | | |
| US 4902127 | A | 20-02-1990 | AUCUN | | |
| US 2003151732 | A1 | 14-08-2003 | AUCUN | | |
| EP 1055941 | A | 29-11-2000 | US | 6580497 B1 | 17-06-2003 |
| US 2004036852 | A1 | 26-02-2004 | EP | 1346237 A1 | 24-09-2003 |
| | | | FR | 2818752 A1 | 28-06-2002 |
| | | | WO | 0250565 A1 | 27-06-2002 |

EPO FORM P0460